# EUROPÄISCHE PATENTSCHRIFT

(11) **EP 2 179 872 B1**
(45) Veröffentlichungstag und Bekanntmachung des Hinweises auf die Patenterteilung: **13.06.2012**
(21) Anmeldenummer: 09013201.0
(22) Anmeldetag: 20.10.2009
(51) Int. Cl.: B60G 17/015, B60G 17/052, F16K 11/18, F16K 31/02

(54) **Luftfederungseinrichtung mit elektro-mechanischer Stelleinrichtung zum Rückstellen eines Schaltventils in die Stellung Fahrt**
Air suspension system with an electromechanic actuator to return a distributor valve into the drive position
Système de suspension pneumatique avec un mécanisme de commande électromécanique pour repositionner un distributeur de commande dans la position de roulage

(30) Priorität: 21.10.2008 DE 102008052426
(43) Veröffentlichungstag der Anmeldung: 28.04.2010
(73) Patentinhaber: KNORR-BREMSE Systeme für Nutzfahrzeuge GmbH, 80809 München (DE)
(72) Erfinder: Diossy, Géza, 6060 Tiszakécske (HU)
(74) Vertreter: Mattusch, Gundula

(56) Entgegenhaltungen:
- DE-A1- 4 202 729
- DE-A1-102007 005 979
- DE-A1-102007 005 981
- DE-A1-102007 045 012

## Beschreibung

### St*and der Technik

Die Erfindung geht aus von einer Luftfederungseinrichtung zum Heben und Senken des Fahrzeugaufbaus von luftgefederten Fahrzeugen mit Niveauregelung, gemäß dem Oberbegriff von Anspruch 1.

Bei Luftfederungseinrichtungen mit Luftfederbälgen ist zusätzlich zum Niveauregelventil, welches das Niveau einer Anhängerplattform oder eines Anhängerrahmens in bekannter Weise auf einen konstanten Wert einregelt, eine manuell betätigbare Niveauregelventileinheit vorgesehen, mittels der von einer Bedienperson manuell und unter Umgehung des Niveauregelventils eine gewünschte Niveaulage der Anhängerplattform bzw. des Fahrzeugsaufbaus eingestellt werden kann. Dazu wird die Niveauregelventileinheit manuell in die Stellungen "Heben", "Senken" oder "Stop" gestellt. Dazu weist die Niveauregelventileinheit Handbetätigungsmittel auf, womit z.B. eine für ein Beladen des Fahrzeugs an einer Laderampe gewünschte Niveaulage eingestellt werden kann. Weiterhin muss eine Stellung "Fahrt" vorhanden sein, in welcher das Niveauregelventil wieder wirksam wird.

Eine Luftfederungseinrichtung ist in der DE 42 02 729 C2 beschrieben und beinhaltet ein Niveauregelventil sowie ein Schaltventil mit einer eine pneumatische Steuerkammer begrenzenden, manuell betätigbaren Schaltwelle. Zum automatischen Schalten des Schaltventils in die Stellung "Fahrt" auf das elektrische Steuersignal hin wird die Steuerkammer mittels eines Magnetventils belüftet, wodurch sich die Schaltwelle axial verschiebt. Nachteilig ist dabei jedoch, dass bei einer Leckage im pneumatischen System kein zuverlässiges Rückschalten des Schaltventils in die Stellung "Fahrt" möglich ist. Weiterhin bedingt eine Verlegung von pneumatischen Leitungen zur Belüftung der Steuerkammer einen gewissen Montage- und Herstellaufwand.

Zur Vermeidung einer pneumatischen Betätigung des Schaltventils offenbart die gattungsbildende DE 10 2007 005979 A1 eine Schalteinrichtung zum willkürlichen Heben und Senken des Fahrzeugaufbaus mit einem durch eine Federeinrichtung in die Stellung "Fahrt" rückführbaren Bedienelement. Weiterhin ist eine das Bedienelement mechanisch verriegelnde Rasteinrichtung vorgesehen, welche einen mit einem Elektromagneten zusammen wirkenden, in eine ausgefahrene Stellung federvorgespannten Bolzen beinhaltet, der mit Rastöffnungen zusammen wirkt. Im verriegelten Zustand der Rasteinrichtung, d.h. bei in die entsprechende Rastöffnung ausgefahrenem Bolzen wird eine durch die Federkraft der Federeinrichtung bedingte Rückführung des Bedienelements in die Stellung Fahrt verhindert. Hingegen ist die Rasteinrichtung vom verriegelten in den entriegelten Zustand durch ein elektrisches Signal stellbar, welches vom ABS des Fahrzeugs bei einer Bremsung erzeugt wird., wodurch das Bedienelement durch die Federkraft in die Stellung "Fahrt" automatisch rückgestellt wird. Die Bestromung des Elektromagneten zur Entriegelung der Rasteinrichtung erfolgt jedoch nur über einen gewissen Zeitraum, so dass nach Verstreichen dieses Zeitraums der Bolzen wieder in seine federvorgespannte ausgefahrene Stellung ausfährt. Wenn dann beispielsweise während eines Ampelstopps das von außen gut zugängige Bedienelement von unbefugter Hand verstellt wird, beispielsweise in die Stellung "Heben", so rastet das Bedienelement in die der Stellung "Heben" entsprechende Rastöffnung ein und verbleibt dort. Damit ist aber nicht vollständig sichergestellt, dass die Stellung "Fahrt" während der Fahrt eingenommen bleibt.

Der Erfindung liegt demgegenüber die Aufgabe zugrunde, eine Luftfederungseinrichtung der eingangs erwähnten Art derart weiter zu bilden, dass sie eine hohe Funktionssicherheit aufweist.

Erfindungsgemäß wird diese Aufgabe durch die Merkmale von Patentanspruch 1 gelöst.

### Offenbarung der Erfindung

Die Erfindung geht aus von dem Gedanken, dass das elektrische Steuersignal auf ein elektro-mechanisches Stellglied wirkt, welches das Schaltventil von einer von der Stellung "Fahrt" abweichenden Stellung über eine ausschließlich unmittelbare mechanische Betätigung, insbesondere ohne Wirken von pneumatischen Kräften in die Stellung "Fahrt" schaltet.

Dann ist zum einen der Herstell- und Montageaufwand geringer als beim eingangs beschriebenen Stand der Technik, weil anstatt pneumatischer Leitungen lediglich elektrische Leitungen im Fahrzeug verlegt werden müssen. Zum andern können Störungen oder Leckagen im pneumatischen System nicht mehr das automatische Rückstellen des Schaltventils in die Stellung "Fahrt" beeinträchtigen.

Erfindungsgemäß beinhaltet das Schaltventil ein Schieberventil, dessen Ventilschieber von dem elektro-mechanischen Stellglied in die Stellungen "Stop" und "Fahrt" betätigbar ist, wobei das elektromechanische Stellglied einen Elektromagneten und einen mit dem Ventilschieber des Schieberventils verbundenes Betätigungselement beinhaltet, welches durch die vom Elektromagneten erzeugten Magnetkräfte bewegt wird.

Weiterhin sind zum Einstellen der Stellungen "Heben" und "Senken" mit dem Schieberventil zusammen wirkende, manuell betätigbare Schaltventile vorgesehen.

Durch die in den Unteransprüchen aufgeführten Maßnahmen sind vorteilhafte Weiterbildungen und Verbesserungen der in den unabhängigen Ansprüchen angegebenen Erfindung möglich.

Vorzugsweise ist der Ventilschieber des Schieberventils zusätzlich manuell betätigbar.

Genaueres geht aus der folgenden Beschreibung von Ausführungsbeispielen hervor.

### Zeichnung

Ausführungsbeispiele der Erfindung sind in der Zeichnung dargestellt und in der nachfolgenden Beschreibung näher erläutert. In der Zeichnung zeigt:
- Fig.1: ein schematisches Schaltbild einer Luftfederungseinrichtung gemäß einer bevorzugten Ausführungsform;
- Fig.2: eine schematische Querschnittsdarstellung einer nicht erfindungsgemäßen Ausführungsform eines Schaltventils der Luftfederungseinrichtung von Fig.1:
- Fig.3: eine schematische Querschnittsdarstellung einer weiteren nicht erfindungsgemäßen Ausführungsform eines Schaltventils der Luftfederungseinrichtung von Fig.1;

- Fig.4: eine schematische Querschnittsdarstellung einer weiteren nicht erfindungsgemäßen Ausführungsform eines Schaftventils der Luftfederungseinrichtung von Fig.1;
- Fig.5: eine schematische Querschnittsdarstellung einer erfindungsgemäßen Ausführungsform eines Schaltventils der Luftfederungselnrichtung von Fig.1.

Bauteile und Baugruppen gleicher Funktion sind bei den verschiedenen Ausfohrungsformen jeweils mit den gleichen Bezugszahlen bezeichnet.

### Beschreibung der Ausführungsbeispiele

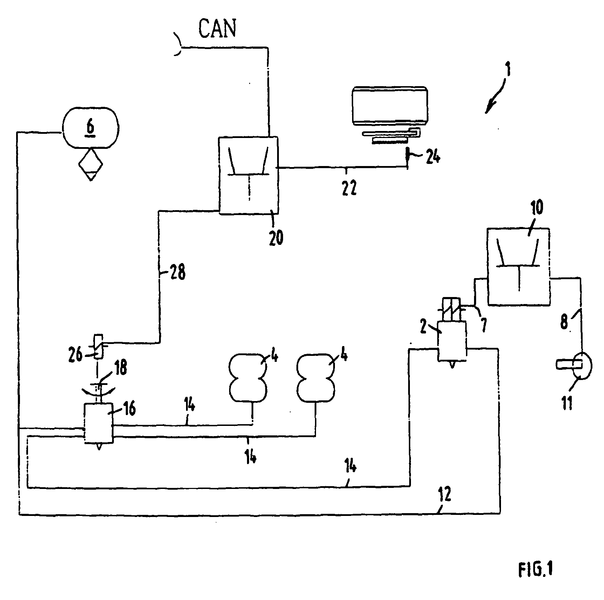

In Fig.1 ist eine Luftfederungseinrichtung 1 eines Fahrzeugs, beispielsweise eines Anhängers einer Zugfahrzeug-Anhängerkombination dargestellt, welche ein elektro-pneumatisches Niveauregelventil 2 beinhaltet, welches das Niveau einer Anhängerplattform oder des Anhängers auf ein konstantes Soll-Niveau durch Be- oder Entlüften von Luftfederbälgen 4 einregelt. Die Druckluft hierzu wird beispielsweise einem am Anhänger angeordneten Druckluftvorrat 6 entnommen.

Das Niveauregelventil 2 wird Ober eine Signalleitung 7 von einem Steuergerät 10 der Luftfederungseinrichtung 1 abhängig von einem von einem Niveausensor 11 ausgesteuerten und über eine Signalleitung 8 in das Steuergerät 10 eingesteuerten Wert angesteuert, derart, dass während des Zustands "Fahrt" ein beispielsweise durch Beladung geringeres Niveau durch eine Beizung der Luftfederbälge 4 auf ein voreingestelltes Soll-Niveau angehoben wird. Hierzu ist das Niveauregelventil 2 einerseits durch eine pneumatische Leitung 12 mit dem Druckluftvorrat 8 verbunden.

Andererseits ist in eine weitere pneumatische Leitung 14, welche das Niveauregelventil 2 mit den Luftfederbälgen 4 verbindet, ein manuell betätigbares Schaltventil 16 geschaltet, mit dem von einer Bedienperson manuell und unter Umgehung des Niveauregelventils 2 eine gewünschte Niveaulage der Anhängerplattform eingestellt werden kann. Dazu weist das Schaltventil 16 ein Handbetätigungsorgan 18 auf, über welches wenigstens die Stellungen "Heben" und "Senken" manuell geschaltet werden können, womit z.B. eine für ein Beladen des Anhängers an einer Laderampe gewünschte Niveaulage eingestellt werden kann. Weiterhin muss ein Betriebszustand "Stop" vorhanden sein, in welchem der Hebe- bzw. Senkvorgang gestoppt werden kann, sowie ein Betriebszustand "Fahrt", in welchem das Niveauregelventil 2 wieder wirksam wird.

Der Fahrzustand des Anhängers wird durch einer Steuereinheit zugehende Signale erfasst, bevorzugt durch die einem Bremssteuergerät 20 über eine Signalleitung 22 zugehenden Signale wenigstens eines Geschwindigkeitssenors 24. Das Bremssteuergerät 20 Ist beispielsweise das Steuergerät einer elektronisch geregelten Bremseinrichtung (EBS) des Anhängers mit integrierter ABS-Funktion. Abhängig von den Signalen des wenigstens einen Geschwindigkeitssensors 24 erzeugt das Bremssteuergerät 20 ein elektrisches Steuersignal für ein elektro-mechanisches Stellglied 26, welches über eine elektrische Signalleitung 28 mit dem Bremssteuergerät 20 in Verbindung steht. Die Ansteuerung des elektro-mechanischen Stellglieds 26 durch das Bremsteuergerät 20 kann beispielsweise derart ausgeführt sein, dass ab dem Überschreiten einer bestimmten Grenzgeschwindigkeit, z.B. 15 km/h das elektrische Steuersignal zum Aktivieren bzw. Schalten des elektro-mechanischen Stellglieds 26 erzeugt wird.

Das elektro-mechanische Stellglied 26 zum automatischen Herstellen der Stellung "Fahrt" des Schaltventils 16 wird daher ausschließlich durch ein elektrisches Steuersignal aktiviert bzw. betätigt und erzeugt dann abhängig von dem elektrischen Steuersignal ein ausschließlich mechanisches Signal, erfindungsgemäß eine elektromagnetische Kraft, welche auf das Schaltventil 16 wirkt, ohne dass hierzu etwa ein pneumatisches Signal oder eine auf der Basis einer Pneumatik erzeugte Kraft zum Einsatz kommt.

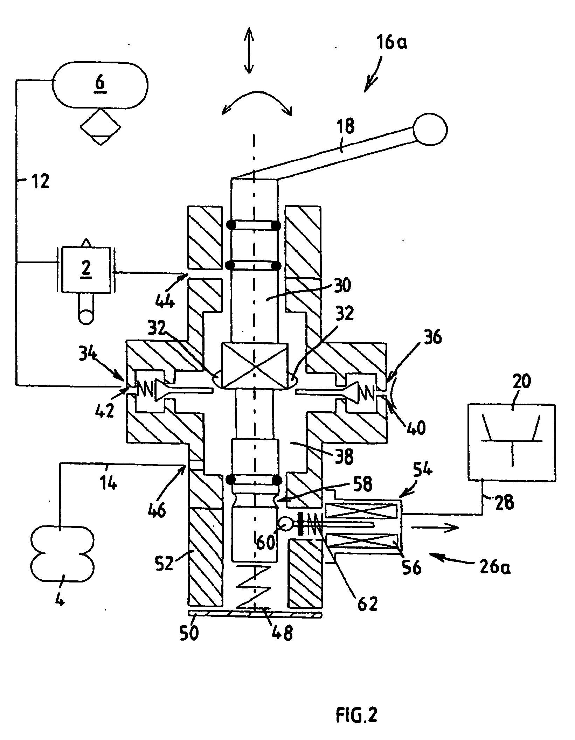

Gemäß der nicht erfindungsgemäßen Ausführungsform des Schaltventils 16a von Fig.2 wirkt das elektromechanische Stellglied 26a auf ein ansonsten manuell betätigbares Schaltglied 30 des Schaltventils 16a. Dieses Schaltglied 30 des Schaltventils 16a wird insbesondere durch eine Schaltwelle gebildet die durch Drehung um ihre Wellenachse in die Stellungen "Heben" und "Senken" und durch axiale Bewegung in die Stellungen "Stop" und "Fahrt" schaltbar ist. Das elektro-mechanische Stellglied 26a bewirkt dann die axiale Verstellung der Schaltwelle 30.

Beispielsweise ist die Schaltwelle 30 an ihrem radial äußeren Umfang mit Nocken 32 versehen, Ober welche abhängig von der Drehlage der Schaltwelle 30 ein federvorgespanntes Einlassventil 34 und ein federvorgespanntes Auslassventil 36 vor einer Schlleßstellung in öffnungsstellung und umgekehrt geschaltet werden kann. Das Auslassventil 36 verbindet geöffnet eine Arbeitskammer 38 des Schaltventils 16 mit einer Entlüftung oder Drucksenke 40 und das Einlassventil 34 geöffnet die vom Druckluftvorrat 6 an einen Eingangsanschluss 42 herangeführte Druckluft mit der Arbeitskammer 38.

In der in Fig.2 gezeigten Stellung "Fahrt" befinden sich jedoch das Einlassventil 34 und das Auslassventil 36 in ihrer federvorgespannten Schließstellung, so dass sie keinen Einfluss auf eine Be- oder Entlüftung der Luffederbälge 4 haben. Dann findet eine Be- oder Entlüftung über das an einen weiteren Eingangsanschluss 44 angeschlossene Niveauregelventil 2 statt, wobei dieser Eingangsanschluss 44 dann über die Arbeitskammer 38 mit einem Ausgangsanschluss 46 des Schaltventils 16 in Verbindung steht, welcher über die pneumatische Leitung 14 zu den Luftfederbälgen 4 führt. Somit hat das Schaltventil 16 in dieser Stellung ("Fahrt") lediglich eine druckleitende Funktion. Falls jedoch die Schaltwelle 30 in die Stellung "Heben" oder "Senken" um ihre Achse verdreht wird, werden auch die Nocken 32 mitverdreht und betätigen das Einlassventil 34 bzw. das Auslassventil 36 in Öffnungsstellung, wodurch die Luftfederbälge 4 be- bzw. entlüftet werden. Gleichzeltig wird dabei der Eingangsenschluss 44 gesperrt.

Wie bereits angedeutet, ist die Schaltwelle 30 zusätzlich axial schaltbar. Wird die Schattwelle 30 in Bezug zu Fig.2 beispielsweise manuell gegen die Wirkung von Federmitteln 48 nach unten oder in das Schaltventilgehäuse 52 hinein gedrückt, erzeugt dies die Stellung "Stop" des Schaltventils 16, in welcher die zuletzt manuell eingestellte Niveaulage beibehalten wird und somit kein weiteres Be- bzw. Entlüften über das Einlassventil 34 bzw. das Auslassventil 36 mehr stattfindet. Andererseits bewirkt eine axiale Bewegung der Schaltwelle 30 in Bezug zu Fig.2 nach oben oder aus dem Schaltventilgehäuse 52 heraus ein Umschalten des Schaltventils 16 in die Stellung "Fahrt". Das elektro-mechanische Stellglied 26a beinhaltet daher zum einen die Schaltwelle 30 des Schaltventils 16 ausgehend von der Stellung "Stop" in die Stellung "Führt" vorspannende Federmittel 48, welche sich einerseits an einer Stirnfläche der Schaltwelle 30 und andererseits an einem Boden 50 des Schaltventilgehäuses 52 abstutzen.

Weiterhin beinhaltet das elektro-mechanische Stellglied 26a eine abhängig von dem vom Bremssteuergerät 20 herangeführten elektrischen Steuersignal in der Stellung "Stop" verriegelbare oder entriegelbare elektro-mechanische Verriegelungseinrichtung 54. Mit anderen Worten kann die Schaltwelle 30 manuell in Bezug zu Fig.2 axial nach unten gedrückt werden, um zunächst die Stellung "Stop" einzunehmen. Die elektro-mechanische Verriegelungseinrichtung 54 beinhaltet dann ein abhängig von einer Be- oder Entstromung eines Elektromagneten 56 mit einer Ausnehmung 58 der Schaltwelle 30 zusammen wirkendes Verriegelungselement 60. Dieses Verriegelungselement 80 besteht beispielsweise aus einem vom Magnetfeld des Elektromagneten 56 durchsetzten ferromagnetischen Bolzen mit Kugelkopf, der in eine Umfangsnut 58 der Schaltwelle 30 eingreifbar ausgebildet ist. Dieser Bolzen mit Kugelkopf 60 ist durch Federmittel 62 in die eingreifende, die Schaltwelle 30 in der Stellung "Stop" verriegelnde Stellung vorgespannt. Wenn daher die Schaltwelle 30 in Bezug zu Fig.2 nach unten gedrückt wird, rastet der Bolzen mit Kugelkopf 60 bedingt durch seine Federvorspannung automatisch in die Umfangsnut 58 der Schaltwelle 30 ein und verriegelt diese dadurch In der Stellung "Stop".

Erhält nun der Elektromagnet 56 Ober das Bremssteuergerät 20 das elektrische Steuersignal abhängig von einem vom Geschwindigkeitssensor 24 ausgesteuerten Signal, welches eine Fahrt mit mehr als beispielsweise 15 km/h repräsentiert, beispielsweise in Form einer Bestromung, so erzeugt er ein magnetisches Feld und damit auch eine Magnetkraft. Diese auf den Bolzen mit Kugelkopf 60 wirkenden Magnetkräfte vermögen die Federkräfte der Federmittel 62 zu überwinden, so dass der Bolzen mit Kugelkopf 60 bedingt durch die Magnetkräfte aus der Umfangsnut 58 herausgezogen wird und die Schaltwelle 30 freigibt, welche ihrerseits nun durch die sie vorspannenden Federmittel 48 getrieben in Bezug zu Fig.2 axial nach oben verschoben wird, um die Stellung "Fahrt" einzustellen.

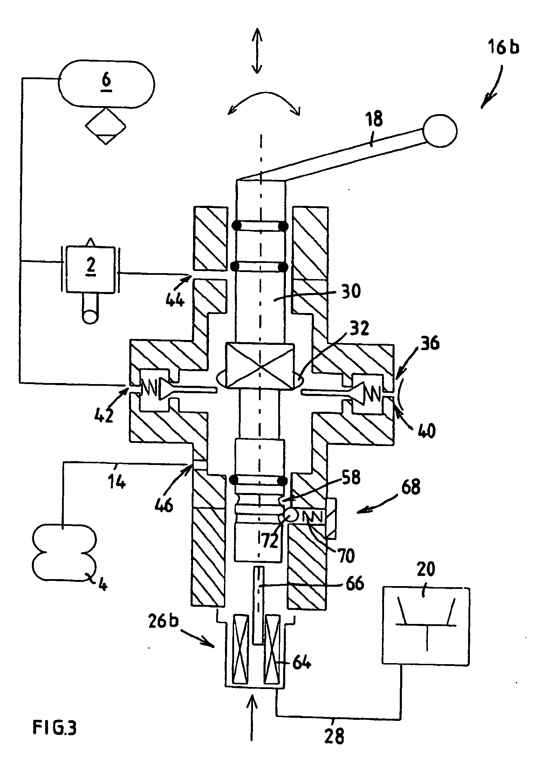

Anstatt durch Federkräfte von Federmitteln kann gemäß einer weiteren, in Fig.3 gezeigten nicht erfindungsgemäßen Ausführungsform des Schaltventils 16b das elektro-mechanische Stellglied 26b wenigstens ein abhängig von einer Be- oder Entstromung eines Elektromagneten 64 auf die Schaltwelle 30 mittelbar oder unmittelbar mechanisch wirkendes Betätigungselement 66 beinhalten. In diesem Fall verschiebt daher ein durch die Magnetkräfte des Elektromagneten 64 betätigter Bolzen 66 die Schaltwelle 30 in Bezug zu Fig.3 nach oben in die Stellung "Fahrt".

Weiterhin beinhaltet dann das elektro-mechanische Stellglied 26b gemäß Fig.3 eine die Schaltwelle 30 des Schaltventils 16 in der Stellung "Stop" verriegelnde Verriegelungseinrichtung 68, wobei die Verriegelungskraft der Verriegelungseinrichtung 68 durch die von dem elektromagnetbetätigten Bolzen 66 auf die Schaltwelle 30 ausgeübte Betätigungskraft überwindbar ist. Diese Verriegelungseinrichtung 68 beinhaltet wenigstens ein mit wenigstens einer Ausnehmung, beispielsweise mehreren in Axialrichtung aneinander gereihten Umfangsnuten 58 der Schallwelle 30 zusammenwirkendes, in eine Sperrstellung durch Federmittel 70 vorgespanntes Verriegelungsglied 72, beispielsweise in Form einer federvorgespannten Kugel. Wenn daher der Elektromagnet 64 unbestromt ist und keine Magnetkraft auf den Bolzen 66 wirkt, so vermag die Verriegelungseinrichtung 68 die Schaltwelle 30 in der Stellung "Stop" zu halten. Bei Bestromung des Elektromagneten 64 wird jedoch auf die Schaltwelle 30 des Schaltventils 16b eine mechanische Kraft erzeugt, welche die Haltkraft der Verriegelungseinrichtung 68 überwindet, wobei das Verriegelungselement 72 gegen die Wirkung der Federmittel 70 zurückschnappt und außer Eingriff mit der betreffenden Umfangsnut 58 gerät, wodurch die Stellung "Fahrt" eingenommen wird.

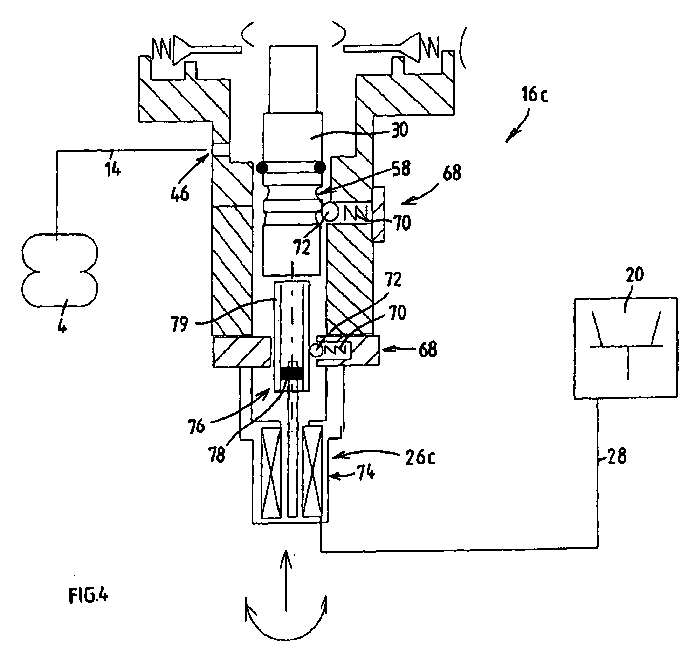

Alternativ hierzu kann auch gemäß der nicht erfindungsgemäßen Ausführungsform des Schaltventils 16c von Fig.4 das Stellglied 26c ein durch einen Elektromotor 74 über einen Mutter-Spindel-Trieb 76 getriebenes Betätigungsglied beinhalten, welches beispielsweise die von der sich durch den Elektromotor 74 getriebene Spindel 78 axial verschliebliche, aber drehfest geführte Mutter 79 ist, die die Schaltwelle 30 des Schaltventils 16 aus der manuell eingenommenen Stellung "Stop" in die Stellung "Fahrt", d.h. in Fig.4 nach oben schaltet. Zur durch den Elektromotor überwindbaren Verriegelung der Schaltwelle 30 in der Stellung "Stop" können wiederum eine oder mehrere rein mechanische Verriegelungseinrichtungen 68 wie in Fig.3 vorgesehen sein, wobei ein Verriegelungselement 72 beispielsweise in Form einer durch Federmittel 70 vorgespannten Kugel von radial außen her z.B. in einen Gewindegang der Mutter 79 eingreift und der durch Federvorspannung erzeugte Formschluss durch den Elektromotor 74 überwunden werden kann.

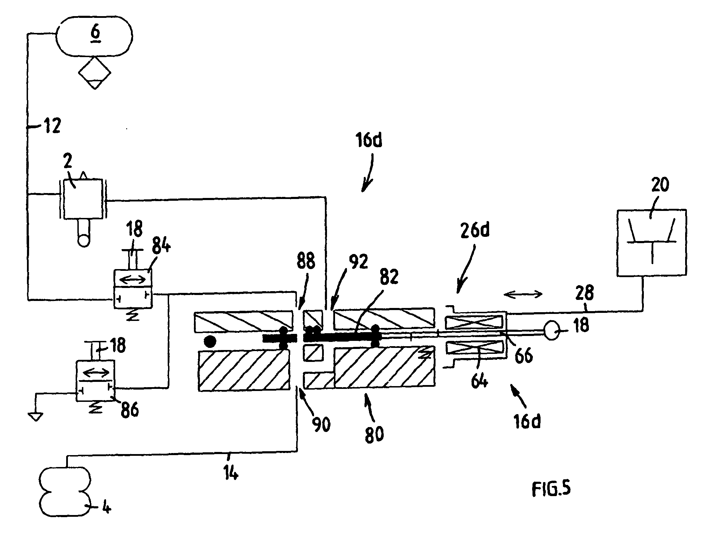

Wenn das Schaltventil 16d gemäß der erfindungsgemäßen Ausführungsform von Fig.5 beispielsweise durch ein Schieberventil 80 gebildet wird, bei welchem abhängig von axialen Stellungen eines Ventilschiebers 82 die Schaltstellungen des Schaltventils 16d erzeugt werden, dann kann dessen axial beweglicher Ventilschieber 82, zusätzlich zu einer manuellen Betätigung mittels des Handbetätigungsorgans 18, von dem elektro-mechanischen Stellglied 16d in die Stellungen "Stop" und "Fahrt" betätigt werden.

Das elektro-mechanische Stellglied 16d beinhaltet in diesem Fall beispielsweise ebenfalls einen Elektromagneten 64 und einen mit dem Ventilschieber 82 verbundenen, beispielsweise ferromagnetischen Betätigungselement 66, beispielsweise einen Bolzen, welcher durch die vom Elektromagneten 64 erzeugten Magnetkräfte bewegt und dadurch den Ventilschieber 82 insbesondere in die Stellung "Fahrt" betätigt.

Weiterhin sind zum Einstellen der Stellungen "Heben" und "Senken" mit dem Schieberventil 80 zusammen wirkende, manuell betätigbare, pneumatische Schaltventile vorgesehen, insbesondere ein jeweils als 2/2-Wegeventil ausgebildetes Einlassventil 84 und Auslassventil 86, welche dem Schieberventil 80 in Bezug auf den Druckluftvorrat 6 vorgeordnet sind:

In der Durchlassstellung des Einlassventils 84 steuert das Schieberventil 80 den durch das Einlassventil 84 gesteuerten Druck lediglich durch, was der Stellung "Heben" entspricht Zum "Senken" wird das Einlassventil 84 in Sperrstellung und das Auslassventil 86 in seine Öffnungsstellung geschaltet, wodurch bei der in Fig.5 gezeigten Stellung des Ventilschiebers 82 die Luftfederbälge 4 entlüftet werden. In den Stellungen "Heben" und "Senken" befindet sich der Ventilschieber 82 des Schieberventils 80 daher in einer Stellung, in welcher ein mit dem Einlassventil 84 verbundener Anschluss 88 auf einen mit den Luftfederbälgen 4 verbundenen Anschluss 90 durchgeschaltet wird. Hingegen wird ein mit einem Ausgang des Niveauvegelventils 2 verbundener Anschluss 92 des Schieberventils 80 abgesperrt.

Wie anhand Fig.5 leicht vorstellbar ist, kann der Ventilschieber 82 durch Bestromung des Elektromagneten 64 aber auch in die Position "Fahrt" gebracht werden, in welcher der mit dem Ausgang des Niveauregelventils 2 verbundene Anschluss 92 auf den mit dem mit den Luftfederbälgen 4 verbundenen Anschluss 90 durchgeschaltet ist und der mit dem Einlassventil 84 bzw. Auslassventil 86 verbundene Anschluss abgesperrt wird. Der Elektromagnet 64 wird vom Steuergerät 20 dabei derart bestromt, dass der Ventilschieber 82 die oben bezeichneten Stellungen einnehmen kann.

### Bezugszahlenliste

- 1: Luftfederungseinrichtung
- 2: Niveauregelventil
- 4: Luftfederbälge
- 6: Druckluftvorrat
- 7: Signalleitung
- 8: Signalleitung
- 10: Steuergerät
- 11: Niveausensor
- 12: pneumatische Leitung
- 14: pneumatische Leitung
- 18: Schaltventil
- 18: Handbetatigungsorgan
- 20: Bremssteuergerät
- 22: Signalleitung
- 24: Geschwindigkeitssensor
- 26: a/b/c) Stellglied
- 28: Signalleitung
- 30: Schaltwelle
- 32: Nocken
- 34: Einlassventil
- 36: Auslassventil
- 38: Arbeitskammer
- 40: Entlüftung
- 42: Eingangsanschluss
- 44: Eingangsanschluss
- 46: Ausgangsanschluss
- 48: Federmittel
- 50: Boden
- 52: Schaltventilgehäuse
- 54: Verriegelungseinrichtung
- 56: Elektromagnet
- 58: Ausnehmung
- 60: Verriegelungselement
- 62: Federmittel
- 64: Elektromagnet
- 66: Betätigungselement
- 68: Verriegelungseinrichtung
- 70: Federmittel
- 72: Verriegelungselement
- 74: Elektromotor
- 76: Mutter-Spindel-Trieb
- 78: Spindel
- 79: Mutter
- 80: Schieberventil
- 82: Ventilschieber
- 84: Einlassventil
- 86: Auslassventil
- 88: Anschluss
- 90: Anschluss

## Patentansprüche

1. Luftfederungseinrichtung (1) zum Heben und Senken des Fahrzeugaufbaus von luftgefederten Fahrzeugen mit Niveauregelung, mit einer Druckluftquelle (6), wenigstens einem Niveauregelventil (2), mindestens einer Fahrzeugachse zugeordneten Luftfederbälgen (4), sowie mit einer Steuerventileinrichtung zur manuellen Niveaueinstellung des Fahrzeugaufbaus unter Umgehung des Niveauregelventils (2), welche wenigstens ein in eine Leitungsverbindung (14) des Niveauregelventils (2) mit den Luftfederbälgen (4), oder mit der Druckluftquelle eingebautes Schaltventil (16) mit den Stellungen "Heben", "Senken", "Stop" und "Fahrt" beinhaltet, wobei der Fahrzustand des Fahrzeugs durch einer Steuereinheit (20) zugehende Signale erfasst und aus diesen Signalen ein elektrisches Steuersignal generiert wird, wobei das elektrische Steuersignal auf ein elektro-mechanisches Stellglied (26; 26d) wirkt, welches das Schaltventil (16) von einer von der Stellung "Fahrt" abweichenden Stellung über eine mechanische Betätigung in die Stellung "Fahrt" schaltet, **dadurch gekennzeichnet, dass** das Schaltventil (16; 16d) ein Schieberventil (80) beinhaltet, dessen Ventilschieber (82) von dem elektro-mechanischen Stellglied (26; 26d) in die Stellungen "Stop" und "Fahrt" betätigbar ist und zum Einstellen der Stellungen "Heben" und "Senken" mit dem Schieberventil (80) zusammen wirkende, manuell betätigbare Schaltventile (84, 86) vorgesehen sind, wobei das elektromechanische Stellglied (16; 16d) einen Elektromagneten (64) und einen mit dem Ventilschieber (82) des Schieberventils (80) verbundenes Betätigungselement (66) beinhaltet, welches durch die vom Elektromagneten (64) erzeugten Magnetkräfte bewegt wird.

2. Luftfederungseinrichtung nach Anspruch 1, **dadurch gekennzeichnet, dass** der Ventilschieber (82) des Schieberventils (80) zusätzlich manuell betätigbar ist.

## Claims

1. Air suspension system (1) for raising and lowering the vehicle body of air-sprung vehicles with level regulation, with a compressed air source (6), at least one level regulating valve (2), at least one air-suspension bellows (4) associated with a vehicle axle, and with a control valve system for adjusting the level of the vehicle body manually while bypassing the level regulating valve (2), which comprises at least one shifting valve (16) incorporated in a line (14) connecting the level regulating valve (2) to the air-suspension bellows (4) or to the compressed air source, the said shifting valve having the positions "Raise", "slower", "Stop" and "Drive", such that a control unit (20) picks up signals concerning the driving status of the vehicle and from those signals generates an electric control signal, this electric control signal acting upon an electro-mechanical control element (26; 26d) which switches the shifting valve (16) from a position different from the "Drive" position, by mechanical actuation, to the "Drive" position, **characterised in that** the shifting valve (16; 16d) comprises a sliding valve (80) whose valve slide (82) can be actuated by the electro-mechanical control element (26; 26d) to the positions "Stop" and "Drive" and, to obtain the positions "Raise" and "Lower", manually actuated shifting valves (84, 86) that co-operate with the sliding valve (80) are provided, and the electro-mechanical control element (16; 16d) comprises an electromagnet (64) and an actuating element (66) connected to the valve slide (82) of the sliding valve (80), which is moved by the magnetic force produced by the electromagnet (64).

2. Air suspension system according to Claim 1, **characterised in that** the valve slide (82) of the sliding valve (80) can in addition by actuated manually.

## Revendications

1. Dispositif (1) de suspension pneumatique pour soulever et abaisser la structure de véhicules à suspension pneumatique et à régulation de niveau, comprenant une source d'air comprimé, au moins une vanne (2) de régulation de niveau, au moins un soufflet (4) à ressort pneumatique associé à l'essieu du véhicule, ainsi qu'un dispositif de vanne de commande, qui est destiné au réglage manuel de niveau de la structure du véhicule, en contournant la vanne (2) de régulation de niveau, et qui comporte au moins une vanne (16) de commutation, insérée dans une liaison (14) de conduite de la vanne (2) de régulation de niveau ayant les soufflets (4) à ressort pneumatique ou ayant la source d'air comprimé, et ayant les positions « soulevée », « abaissée », « arrêt » et « marche », l'état de marche du véhicule étant détecté par des signaux allant à une unité (20) de commande et un signal électrique de commande étant produit à partir de ces signaux, dans lequel le signal électrique de commande agit sur un actionneur (26 ; 26d) électromécanique qui fait passer la vanne (16) de commutation d'une position s'écartant de la position « marche » à la position « marche » par un actionnement mécanique, **caractérisé en ce que** la vanne (16 ; 16d) de commutation comporte une vanne (80) à obturateur, dans l'obturateur (82) peut être actionné par l'actionneur (26 ; 26d) électromécanique pour venir dans les positions « arrêt » et « marche » et, pour l'établissement des positions « soulevée » et « abaissée », il est prévu des vannes (84, 86) de commutation actionnables manuellement et coopérant avec la vanne (80) à obturateur, l'actionneur (16 ; 16d) électromécanique comportant un électroaimant (64) et un élément (66) d'actionnement, qui est relié à l'obturateur (82) de la vanne (80) à obturateur et qui est déplacé par les forces magnétiques produites par l'électroaimant (64).

2. Dispositif de suspension pneumatique suivant la revendication 1, **caractérisé en ce que** l'obturateur (82) de la vanne (80) à obturateur peut être actionné supplémentairement d'une manière manuelle. '
